Europäisches Patentamt

(19) European Patent Office

Office européen des brevets

(11) Numéro de publication: **0 109 374**
**A1**

(12) **DEMANDE DE BREVET EUROPEEN**

(21) Numéro de dépôt: **83870105.0**

(22) Date de dépôt: **10.10.83**

(51) Int. Cl.³: **F 24 J 3/02**

(30) Priorité: **08.10.82 BE 209211**
**23.12.82 BE 209806**

(71) Demandeur: **Soetens, Antoon, Grand Breucq 3,**
**B-7561 Escanaffles (BE)**

(43) Date de publication de la demande: **23.05.84**
**Bulletin 84/21**

(72) Inventeur: **Soetens, Antoon, Grand Breucq 3,**
**B-7561 Escanaffles (BE)**

(74) Mandataire: **Callewaert, Jean et al, Bureau Gevers S.A.**
**rue de Livourne, 7 - Bte 1, B-1050 Bruxelles (BE)**

(84) Etats contractants désignés: **BE DE FR GB IT NL**

(54) **Dispositif pour capter l'énergie solaire sur un toit ou analogue.**

㊾ La présente invention concerne un dispositif pour capter l'énergie solaire sur un toit ou analogue qui comporte des conduites calorifères (1), dans lesquelles circule un fluide caloporteur. Ces conduites sont destinées à être posées sur le toit (4) et sont recouvertes de pièces de couverture (2) sensiblement transparentes. Elles sont agencées au-dessus du toit, isolées thermiquement par rapport à ce dernier et enfermées d'une manière sensiblement étanche par les pièces de couverture (2).

0109374

"Dispositif pour capter l'énergie solaire sur un toit ou analogue"

La présente invention est relative à un dispositif pour capter l'énergie solaire sur un toit ou analogue, comportant des conduites calorifères, dans lesquelles circule un fluide caloporteur, destinées à être posées sur le toit, et des pièces de couverture sensiblement transparentes recouvrant ces conduites.

Un panneau solaire du type précité est déjà connu, notamment par la demande de brevet européen 0014682.

Toutefois, un tel panneau présente l'inconvénient de ne pouvoir être utilisé sur des couvertures de toit existantes réalisées par exemple en tuiles traditionnelles.

Un des but essentiels de la présente invention consiste à proposer un dispositif pour capter l'énergie solaire pouvant être installé, sans nécessiter de la main d'oeuvre spécialisée, sur tout type de toit incliné présentant une couverture traditionnelle. De plus, l'invention vise un dispositif à très haut rendement, qui soit relativement peu influencé par des variations climatiques brusques et par la nature même de la couverture du toit.

A cet effet, suivant l'invention, les conduites sont posées au dessus du toit, isolées thermiquement par rapport à ce dernier et enfermées d'une manière sensiblement étanche par les pièces de couverture.

Avantageusement, les conduites sont pourvues d'ailes calorifères.

Suivant une forme de réalisation particulièrement avantageuse, au moins les ailes précitées s'étendent à proximité de la face intérieure des pièces de couverture, tout en étant séparées de cette dernière par une lame d'air formant une couche sensiblement isolante.

Suivant une forme de réalisation particulière, les conduites sont constituées par des éléments s'étendant sensiblement parallèlement les uns aux autres sur un toit inclinée suivant le sens d'inclinaison de ce dernier, des pièces de couverture présentant une section transversale sensiblement cylindrique recouvrant ces éléments.

Suivant une forme de réalisation préférée de l'invention, des raccords étagés sont prévus pour relier les pièces de couverture dans le prolongement les unes des autres et en gradins sur un toit comportant des plaques se chevauchant partiellement, telles que des tuiles.

D'autres détails et particularités de l'invention ressortiront de la description donnée ci-après, à titre d'exemple non limitatif, de quelques formes de réalisation particulières d'un dispositif, suivant l'invention, pour capter l'énergie solaire, avec référence aux dessins annexés.

La figure 1 est une coupe transversale d'une partie d'une première forme de réalisation d'un dispositif suivant l'invention.

La figure 2 est une coupe longitudinale d'une autre partie de cette première forme de réalisation de l'invention.

La figure 3 est une vue partielle en perspective d'un ensemble de deux tuiles équippées d'une deuxième forme de réalisation du dispositif suivant l'invention, dans laquelle certaines parties ont, pour la clarté, été omises.

La figure 4 est une coupe suivant la ligne IV-IV de la figure 3.

La figure 5 est, à plus grande échelle, une coupe longitudinale, suivant la figure 3.

Dans les différentes figures les mêmes chiffres de référence concernent les mêmes éléments ou des éléments similaires.

Le dispositif suivant l'invention pour capter l'énergie solaire sur un toit ou analogue comprend une série de conduites calorifères 1 dans lesquelles circule un fluide caloporteur et des pièces de couverture 2 sensiblement transparentes, réalisées de préférence en verre, qui recouvrent ces conduites 1.

Ce dispositif est caractérisé par le fait que ces conduites 1 sont posées au-dessus du toit 4, isolées thermiquement par rapport à ce dernier et enfermées d'une manière sensiblement étanche dans une enceinte 3 par ces pièces 2. Les conduites 1 sont pourvues d'ailes 1' qui sont également calorifères et qui s'étendent à proximité de la face intérieure des pièces de couverture 2, tout en étant séparées de cette dernière par une lame d'air 3' dont l'épaisseur est telle qu'elle forme une couche sensiblement isolante, c'est-à-dire dans laquelle les courants de convection sont limités au stricte minimum. L'épaisseur de cette lame d'air peut par exemple être de l'ordre de 1 à 1,5 cm.

En pratique, ces conduites 1 sont généralement constituées par des éléments rectilignes sensiblement rigide s'éendant, à une certaine distance les uns des autres, sur un toit incliné 4 suivant la direction d'inclinaison de ce dernier. La couverture du toit étant par exemple constituée par des tuiles traditionnelles, la longueur de ces éléments est légèrement inférieure à celle des tuiles pour tenir compte de leur chevauchement.

Les pièces de couverture 2 ont également sensiblement la même longueur que les éléments de conduite 1 et présentent, dans les formes de réalisation montrées aux figures, une section transversale sensiblement cylindrique, correspondant plus particulièrement à un demi-cylindre.

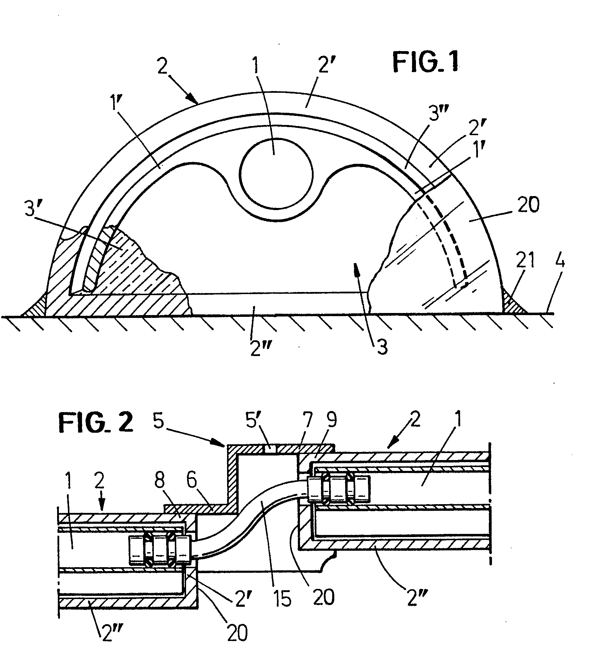

De plus, comme montré à la figure 1, dans une forme de réalisation avantageuse la pièce de couverture 3 s'étend tout autour des conduites 1.

Ainsi, la partie 2' de la pièce de recouvrement s'étendant au-dessus et latéralement par rapport aux conduites présente une forme cylindrique, tandis que la partie inférieure 2'' de cette pièce est applatie et constitue une base par laquelle elle peut reposer sur le toit en formant donc une isolation supplémentaire qui permet d'éviter la pénétration d'humidité dans l'enceinte 3 due à la porosité des tuiles par exemple. Dans cette enceinte 3 est introduite, en dessous des ailes 1', une matière isolante sensiblement rigide 3', telle que du polyuréthane rigide. Ainsi, cette matière supporte et maintient chaque élément de conduite 1 avec ses ailes 1' en place dans l'enceinte 3, à une certaine distance de la partie courbée 2' de la pièce de couverture correspondante.

Afin d'obtenir une absorption maximale de l'énergie solaire par les ailes 1', la face de ces

0109374

dernières dirigée vers la pièce de couverture présente une couleur mate foncée et est légèrement rainurée.

Chaque pièce de couverture 2 est reliée à celle située dans son prolongement par un raccord étagé 5 présentant deux gradins 6 et 7 s'adaptant, à l'endroit où deux panneaux de couverture d'un toit, telle que des tuiles, se chevauchent, sur les extrémités 8 et 9 en regard de deux pièces de couverture successives. La fixation des raccords 5 sur les pièces 2 peut par exemple être réalisée au moyen d'une colle à base de silicone. D'une manière analogue, les pièces 2 peuvent être tenue en place sur la toiture 4 par des joints 21 d'une même colle.

Les deux extrémités des pièces de recouvrement 2, qui dans cette première forme de réalisation se présentent sous forme de gaines, sont obturées à leurs deux extrémités opposées par des plaquettes 20, de manière à former des boîtiers parfaitement étanches contenant chacun une portion de conduite 1 avec ses ailes 1' et la matière isolante 3'.

Les extrémités des éléments de conduite 1, disposés en gradins dans le prolongement les uns des autres, sont reliés entre eux par des tuyaux flexibles 15 s'étendant à travers les raccords 5.

Avantageusement, un trou 5' est ménagé dans les raccords 5 pour permettre d'injecter dans ces derniers une matière isolante sensiblement analogue à celle utilisée dans l'enceinte 3. Par ses propriétés collantes, cette matière peut en même temps servir comme moyen pour fixer ces raccords 5, et donc indirectement les pièces de couverture 2 avec les conduites 1, par rapport au toit.

**0109374**

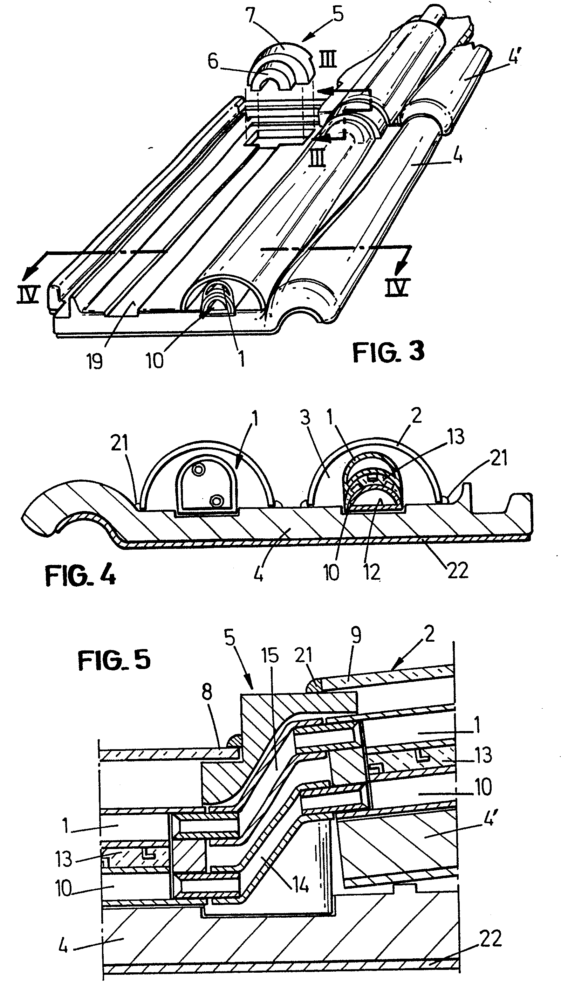

Les figures 3 à 5 représentent une deuxième forme de réalisation du dispositif suivant l'invention pour capter de l'énergie solaire. Cette forme de réalisation se distingue essentiellement par rapport à celle des figures 1 et 2 par le fait qu'elle fait usage d'un type spécial de tuile et qu'elle comporte un double circuit de fluide caloporteur circulant dans des conduites superposées 1 et 10 isolées thermiquement les unes par rapport aux autres par une couche de matière isolante 13.

Ainsi, la conduite supérieure 1 correspond à la conduite 1 de la précédente forme de réalisation et est donc isolée par rapport aux tuiles 4.

La conduite 10 présente une base plane 12 qui est en contact intime avec les tuiles 4 et qui a donc pour but d'utiliser la chaleur des tuiles même pour chauffer le fluide circulant dans la conduite 10. Les conduites 1 et 10, comme les conduites 1 de la première forme de réalisation, sont constituées par des éléments ou portions de tubes rectilignes dont la longueur est quelque peu plus petite que celle d'une tuile.

Les différentes portions de tube de la conduite 1 sont reliées entre elles par des tuyaux flexibles 15, alors que les portions de tube de la conduite 10 sont reliées entre elles par des tuyaux flexibles 14.

Les portions de tube 10 peuvent être positionnées dans un creux 19 prévu dans les tuiles.

Enfin, la face inférieure des tuiles peut être recouverte d'une couche de matière isolante 22.

Lorsque le toit est formé de panneaux ondulés, les conduites 1 avec leurs pièces de couvertures 2 peuvent être posées dans le fond des ondes de ces dernières, toujours de manière à ce que les conduites soient isolées par rapport aux panneaux.

Dans une autre forme de réalisation encore de l'invention, si la couverture du toit est par exemple formée par une couche de bitume, les pièces de couvertures pourraient être formées par des plaques ou panneaux ondulés transparents.

Il est encore important de noter que si on fait usage de pièces de couverture courbées, comme dans les formes de réalisation décrites ci-dessus, par le fait qu'elles font saillies par rapport au toit, des rayons solaires même très obliques pourront atteindre directement les conduites 1 et leurs ailes 1'.

Il est bien entendu que l'invention n'est pas limitée aux formes de réalisation décrites ci-dessus et que bien des variantes peuvent être envisagées sans sortir du cadre du présent brevet.

## REVENDICATIONS

1. Dispositif pour capter l'énergie solaire sur un toit ou analogue, comportant des conduites calorifères dans lesquelles circule un fluide caloporteur, destinées à être posées sur le toit, et des pièces de couverture sensiblement transparentes recouvrant ces conduites, caractérisé en ce que les conduites sont posées au dessus du toit, isolées thermiquement par rapport à ce dernier et enfermées d'une manière sensiblement étanche par les pièces de couverture.

2. Dispositif suivant la revendication 1, caractérisé en ce que les conduites sont pourvues d'ailes calorifères.

3. Dispositif suivant la revendication 2, caractérisé en ce qu'au moins les ailes précitées s'étendent à proximité de la face intérieure des pièces de couverture, tout en étant séparées de cette dernière par une lame d'air formant une couche sensiblement isolante.

4. Dispositif suivant l'une quelconque des revendications 1 à 3, caractérisé en ce que les conduites sont constituées par des éléments d'étendant sensiblement parallèlement les uns aux autres sur un toit inclinée suivant le sens d'inclinaison de ce dernier, des pièces de couverture présentant une section transversale sensiblement cylindrique recouvrant ces éléments.

5. Dispositif suivant la revendication 4, caractérisé en ce que les ailes calorifères s'étendent suivant une surface cylindrique ayant sensiblement le même centre de courbure que les pièces de couvertures, les conduites se situant sur le côté intérieur de cette surface cylindrique.

6. Dispositif suivant l'une quelconque des revendications 1 à 5, caractérisé en ce que les pièces de couverture s'étendent tout autour des conduites.

7. Dispositif suivant la revendication 6, caractérisé en ce que la partie des pièces de couverture s'étendant au dessus et latéralement par rapport aux conduites présente une forme sensiblement cylindrique, tandis que la partie inférieure à cette pièce est applatie et constitue une base par laquelle la pièce de couverture peut reposer sur le toit.

8. Dispositif suivant l'une quelconque des revendications 1 à 7, caractérisé en ce que les conduites sont séparées du toit par une matière isolante sensiblement rigide, telle qu'une mousse rigide de polyuréthane.

9. Dispositif suivant la revendication 8, caractérisé en ce que la matière isolante recouvre la face des ailes calorifères opposée à celle dirigée vers les pièces de couverture.

10. Dispositif suivant l'une quelconque des revendications 2 à 9, caractérisé en ce que la face des ailes dirigée vers les pièces de couverture est légèrement rainurée.

11. Dispositif suivant l'une quelconque des revendications 1 à 10, caractérisé en ce que des raccords étagés sont prévus pour relier des pièces de couverture dans le prolongement les unes des autres et en gradins sur un toit comportant des plaques se chevauchant partiellement, telles que des tuiles.

12. Dispositif suivant la revendication 11, caractérisé en ce que les conduites sont constituées par des éléments rigides disposés en gradins et dans le prolongement les uns des autres et reliés entre eux par des tuyaux sensiblement flexibles s'étendant à travers les raccords étagés.

13. Dispositif suivant l'une quelconque des revendications 8 à 12, caractérisé en ce que chaque pièce de couverture est constituée par une gaine fermée de manière sensiblement étanche à ses deux extrémités opposées et contenant une portion de conduite avec ses ailes calorifères maintenues en place par de la matière isolante.

FIG.1

FIG.2

FIG. 3

FIG. 4

FIG. 5

**Office européen des brevets**

**RAPPORT DE RECHERCHE EUROPEENNE**

0109374

Numéro de la demande

EP  83  87  0105

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-2 468 079   (GRANIER) <br> * En entier * | 1-4,8 | F 24 J    3/02 |
| X | US-A-4 148 296   (PARLATO) <br><br> * En entier * | 1,4,6 <br> 7,13 | |
| D,X | EP-A-0 014 682   (ELIOFORM) <br><br> * Page  2,  ligne  15  - page 4, ligne 18; figures 1,2 * | 1,4,7 <br> 10,12 | |
| A | FR-A-2 398 985   (TAC) <br><br> * Pages 2,3; figures 1-3 * | 1-4,8 <br> 9,12 | |
| A | FR-A-2 374 602   (ANGLO AMERICAN CORP.) <br> * Page  2,  ligns 17-20; figures 1,4 * | 8,9 | DOMAINES TECHNIQUES RECHERCHES (Int. Cl. ³) <br><br> F 24 J <br> E 04 D |
| A | FR-A-2 457 356   (KNAUER) <br> * Pages 5,6; figures 4,5 * | 11,12 | |
| P,X | BE-A-  895 470   (SOETENS) <br><br> * En entier * | 1,4,8 <br> 11,12 | |
| A | DE-A-2 929 220   (WIENEKE) <br><br> ---      -/- | | |

Le présent rapport de recherche a été établi pour toutes les revendications

| Lieu de la recherche <br> LA HAYE | Date d'achèvement de la recherche <br> 13-01-1984 | Examinateur <br> SCHOUFOUR F.L. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

      & : membre de la même famille, document correspondant

OEB Form 1503. 03.82

# RAPPORT DE RECHERCHE EUROPEENNE

Office européen
des brevets

| | DOCUMENTS CONSIDERES COMME PERTINENTS | | Page 2 |
|---|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-A-2 912 206 (WIENEKE) | | |
| | ----- | | |

DOMAINES TECHNIQUES
RECHERCHES (Int. Cl. ³)

Le présent rapport de recherche a été établi pour toutes les revendications

| Lieu de la recherche LA HAYE | Date d'achèvement de la recherche 13-01-1984 | Examinateur SCHOUFOUR F.L. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82